# EUROPEAN PATENT APPLICATION

(11) **EP 3 073 194 A1**
(43) Date of publication of application: **28.09.2016**
(21) Application number: 15000860.5
(22) Date of filing: 24.03.2015
(51) Int. Cl.: F23L 15/02, C03B 5/237

(54) **HEAT EXCHANGING SYSTEM FOR A FURNACE**

(71) Applicant: Linde Aktiengesellschaft, 80331 München (DE)
(72) Inventor: Mieth, Rainer, 85435 Erding (DE); Görisch, Matthias, 90768 Fürth (DE); Carney, Stephen, 81476 München (DE); Richardson, Andrew Peter, Clinton, NJ 08809 (US); Koeder, Horst, 06258 Schkopau (DE)
(74) Representative: Gellner, Bernd

(57) **Abstract**

The invention relates to a heat exchanging system for a furnace (300) with a supply pipe (120, 130) adapted to supply a medium to a burner (310a, 310b) of the furnace (300), an exhaust flue (100) adapted to exhaust combustion waste gases (101) from the furnace (300), the exhaust flue (100) comprising a refractory element (110), wherein the supply pipe (120, 130) is arranged at least partially inside or on the refractory element (110) of the exhaust flue (100).

## Description

The invention relates to a heat exchanging system for a furnace with a supply pipe to supply a medium to a burner of the furnace and with an exhaust flue to exhaust combustion waste gases from the furnace, wherein the exhaust flue comprises a refractory element.

### Prior art

Heat exchanging systems are used for heat recovery from furnaces. Inside the furnace, combustion is conducted by a burner. The burner is supplied with one or more media, e.g. fuel, air, oxygen. Thermal energy of waste gases emerging from the combustion can be used to preheat those media supplied to the burner.

For example, pipes for supplying a medium to the burner can be ducted through a waste gas stream, whereby a heat exchange between the waste gas and the medium inside the pipes can be effected.

If the pipes are directly exposed to the waste gases, which can be corrosive and disintegrating, the pipes can be damaged. Thus, leaks in the pipes can occur. In order to avoid such leaks, pipes have to be maintained in relatively short maintenance intervals and have to be replaced relatively often.

Thus, it is an object of the invention to improve a heat recovery from a furnace in order to preheat media supplied to a burner of the furnace efficiently without possible damage to components.

### Disclosure of the invention

This object is achieved by a heat exchanging system for a furnace and by a furnace with the features of the independent claims. Preferred embodiments and advantages of a furnace and a heat exchanging system according to the invention are subject of the dependent claims and of the following description.

A supply pipe is constructed to supply a medium to a burner of the furnace. An exhaust flue is constructed to exhaust combustion waste gases (also termed flue gases) from the furnace. The exhaust flue comprises a refractory element. According to the invention, the supply pipe is arranged at least partially inside or on the refractory element of the exhaust flue.

The term "refractory element" is to be understood as an element of the exhaust flue that is constructed by a refractory or refractories, i.e. one or more materials resistant to fire. These refractories can for instance be constructed from mortar. The refractories especially comprise appropriate bricks. The refractory element is especially a wall of the exhaust flue. The exhaust flue is especially constructed as a tubular element (tunnel) that is made by the refractory element or surrounded by the refractory element. The exhaust flue is constructed to exhaust waste gases emerging from the combustion inside the furnace. The exhaust flue especially connects the furnace with an appropriate chimney.

The burner is constructed to conduct combustion inside the furnace, especially inside a combustion chamber or melting area of the furnace. Media needed for this combustion is supplied by the supply pipe. Especially, oxygen, air and/or fuel are supplied by the supply pipe. The heat exchanging system can comprise several supply pipes of this kind, especially one supply pipe for each medium. Especially, each supply pipe is analogously arranged at least partially inside or on a refractory element of the exhaust flue. In the following description, it is referred to "a" supply pipe or "the" supply pipe. Without loss of generality, the following description is analogously valid for several pipes of this kind.

At least a part of the entire axial length of the supply pipe is arranged in or on top of the refractory element. The remaining parts of the supply pipe are arranged in an appropriate manner. These remaining parts are especially connected with the burner and a supply mechanism for the medium. The following description especially focusses on those parts of the supply pipe which are arranged in or on top of the refractory element.

The supply pipe is especially integrated or embedded in the refractory element. In this case, the supply pipe is at least partially covered by the refractory element, i.e. the refractory element at least partially surrounds the supply pipe. At least a part of a cross section of the supply pipe may be embedded in the refractory element. This embedded part of the supply pipe is preferentially in direct contact with the refractory element. Alternatively, the supply pipe can be constructed on the refractory element, i.e. on a surface of the refractory element. Also in this embodiment, the supply pipe is preferentially in direct contact with the refractory element.

### Advantages of the invention

By the comparatively high temperature of the waste gases, the exhaust flue and the refractory element of the exhaust flue are heated. Thus, also the refractory element of the exhaust flue has a comparatively high temperature. By arranging the supply pipe in or on top of the refractory element, especially by the direct contact of the supply pipe and the refractory element, heat is exchanged and transferred from the waste gases to the medium inside the supply pipe. Thus, the medium is preheated.

Due to the invention, thermal energy inside the refractory element, which is usually lost and not used in conventional furnaces and heat exchanging systems, is used to easily and effectively preheat the medium. Moreover, no heat is drawn from the furnace in order to preheat the medium.

The supply pipe is particularly isolated by the surrounding refractory element. The supply pipe is not exposed to waste gases. The supply pipe is especially not exposed to a corrosive, disintegrating atmosphere. Thus, a long operating time of the supply pipe is guaranteed and a maintenance interval can be increased.

The refractory element is especially constructed from a castable refractory. The refractory forming the refractory element is especially casted in a manufacturing process. Thus, the supply pipe can easily be embedded in the refractory element with minimum space requirements.

Preferably, the refractory element is constructed by one or more layers of refractory. Each layer can for example be constructed by several bricks as refractory. Each brick can for example be made of mortar. The supply pipe can easily be embedded in the refractory element between two subsequent layers of refractory. Each different layer can be made by the same refractory. Moreover, different refractories with different properties can be used for different layers.

Advantageously, construction parameters of the heat exchanging system are chosen in a way to adjust and/or influence a temperature of the medium in the supply pipe. Thus, the temperature of the medium, which can achieved by the preheating, can be adjusted or at least influenced. Preferably, a position of the supply pipe in or on top of the refractory element is chosen as one of those construction parameters. A (local) temperature inside the refractory element is different at different positions inside the refractory element. Depending on the position of the supply pipe in or on top of the refractory element, a higher or lower temperature of the medium in the supply pipe can be adjusted.

The (local) temperature inside the refractory element is especially given by a temperature gradient. The (local) temperature of an inside surface of the refractory element, closest to the waste gas, is the highest temperature of the refractory element and can have values up to about 1200°C. The (local) temperature of an outside surface of the refractory element, furthest from the waste gas, is the lowest temperature of the refractory element and can have values down to about 600°C.

Preferably, the position of the supply pipe in or on top of the refractory element is chosen dependent on this temperature gradient inside the refractory element. The supply pipe is especially positioned at a position in or on top of the refractory element, with a (local) temperature corresponding to a highest possible operating temperature of the supply pipe. This highest possible operating temperature of the supply pipe is especially dependent on the material the supply pipe is made of. The supply pipe is preferably positioned at a position in or on top of the refractory element, with a (local) temperature of the refractory element between 800°C and 900°C.

Advantageously, construction parameters of the refractory element and/or of the supply pipe are chosen in a way to adjust and/or influence the temperature of the medium in the supply pipe. Preferably, a thermal conductivity and/or a material of the refractory element of the exhaust flue are accordingly chosen as construction parameters. The temperature gradient inside the refractory element can be influenced and/or adjusted dependent on those parameters. In particular, a thermal conductivity of an inner part of the refractory element between the inner surface of the refractory and the supply pipe determines how much heat is transferred from the waste gas to the medium. The thermal conductivity of this inner part of the refractory element may be chosen comparatively high. On the other hand, a thermal conductivity of an outer part of the refractory element may be chosen comparatively low. This outer part is a part of the refractory element between the supply pipe and the outer surface of the refractory element. This outer part especially functions as an insulation of the supply pipe. The thermal conductivity of this outer part especially determines how much heat is emitted from the medium. Different thermal conductivities may result e.g. from different material porosities.

Preferably, a material, a circumference, a length of the supply pipe and/or a volume of media passable through the supply pipe per time are accordingly chosen as construction parameters. Those parameters of the supply pipe especially determine how much heat can be transferred from the waste gas to the medium.

Advantageously, the exhaust flue is constructed as a common flue. Combustion waste gases from the combustion process inside the furnace are ducted through this common flue. The common flue is not necessarily a part of the furnace itself, but the furnace can especially be connected with the common flue. For example the common flue can be connected with the combustion chamber or melting area of the furnace. The common flue can connect the furnace with other devices to further process the combustion waste gases, for example with a chimney, an emission control device and/or a waste heat recovery device.

Preferably, the exhaust flue is constructed as an element of the furnace. This element is especially adapted to exhaust the combustion waste gases from the combustion chamber or melting area. The element can expediently connect the combustion chamber or melting area of the furnace with the common flue.

The invention is suitable for all kinds of different furnaces, for example for a unit melting furnace. Advantageously, the furnace is constructed as a glass melting furnace or as a steel melting furnace. In an advantageous embodiment of the invention, the furnace is constructed as a regenerative furnace.

A regenerative furnace of that kind particularly comprises a regenerator. A regenerator especially comprises two chambers. Each chamber comprises a so called regenerator packing of appropriate refractories, e.g. bricks or gravel. Moreover, each chamber comprises at least one burner and is especially connected with an exhaust flue. Fuel pipes to supply the burner with fuel can also be arranged in the chamber, especially close to the regenerator packing. The media (fuel, air and/or oxygen) supplied to the burners of a regenerative furnace are preheated by the regenerator.

During operation of the regenerative furnace, the burner of a first chamber of the regenerator is operated to conduct combustion. Air and/or oxygen are ducted through the regenerator packing of that first chamber towards the burner. Meanwhile, the burner of the other one of the cambers (second chamber) of the regenerator is not operated. Waste gases are exhausted through that second camber. The exhausted waste gas is ducted through the regenerator packing of that second camber. Thus, this regenerator packing of the second chamber is heated.

After a certain time period (e.g. approximately 20 minutes), operation of the two chambers of the regenerator is reversed. The burner of the first chamber is now idle and the burner of the second chamber is operated. Air and/or oxygen are ducted through the regenerator packing of the second chamber towards the burner. Since this regenerator packing was heated by the waste gas, a heat exchange is conducted between the regenerator packing and the air/oxygen. Thus, the air/oxygen is preheated. Moreover, the fuel supplied to the burner through fuel pipes arranged inside the chamber close to the regenerator packing is also preheated. Waste gases of the combustion are now ducted through the regenerator packing of the first camber and heat that regenerator packing. After another time period operation of the two chambers of the regenerator is reversed again.

Regenerative furnaces can be constructed as cross-fired regenerative furnaces or as end-fired regenerative furnaces. In case of a cross-fired regenerative furnace, the chambers of a regenerator are located on opposite sides of the furnace. In case of an end-fired regenerative furnace, the chambers of a regenerator are located side by side next to each other in a side, especially in a rear wall of the furnace.

Each chamber of the regenerator especially comprises at least one exhaust flue to exhaust combustion waste gases from the regenerator chambers. Especially, these exhaust flues are constructed as an element of the regenerator. The exhaust flues especially comprise a refractory element each. Advantageously, a supply pipe is arranged at least partially inside or on the refractory element of at least one of those exhaust flues.

Moreover the regenerative furnace can comprise a common flue. The exhaust flues of the regenerator chambers can especially be connected with this common flue. Thus, both chambers of the regenerator are especially connected with the common flue. In case of a regenerative furnace, a common flue is especially an exhaust flue, in which the combustion waste gases of both regenerator chambers are merged or through which combustion waste gases exhausted from the first regenerator chamber as well as from the second regenerator chamber are ducted. An exhaust flue with a supply pipe according to the invention is preferably constructed as this common flue.

An exhaust flue with a supply pipe arranged at least partially inside or on a refractory element of the exhaust flue according to the invention can thus preferably be constructed as a common flue of the regenerative furnace and/or as an element of the regenerator of the regenerative furnace.

Preferably, a medium supplied to a burner of the regenerative furnace through those supply pipe or supply pipes can be preheated according to an embodiment of the invention additionally to the preheating by the regenerator. This way the preheating of the medium can be further increased and conducted more efficiently. Especially, a stream of preheated air and/or oxygen ducted towards the burner can be increased and enriched by air/oxygen supplied through the corresponding supply pipe.

### Embodiments of the invention

The present invention will now be described further, by way of example, with reference to the accompanying drawings, in which
- Figure 1: schematically shows a heat exchanging system according to a preferred embodiment of the invention in a sectional side view.
- Figure 2: schematically shows a unit melting furnace with a heat exchanging system according to a preferred embodiment of the invention in a sectional side view.
- Figure 3: schematically shows a regenerative furnace with a heat exchanging system according to a preferred embodiment of the invention in a sectional side view.
- Figure 4: schematically shows another embodiment of a regenerative furnace with a heat exchanging system according to a preferred embodiment of the invention in a sectional side view.
- Figure 5: schematically shows another embodiment of a regenerative furnace with a heat exchanging system according to a preferred embodiment of the invention in a sectional side view.

### Detailed description

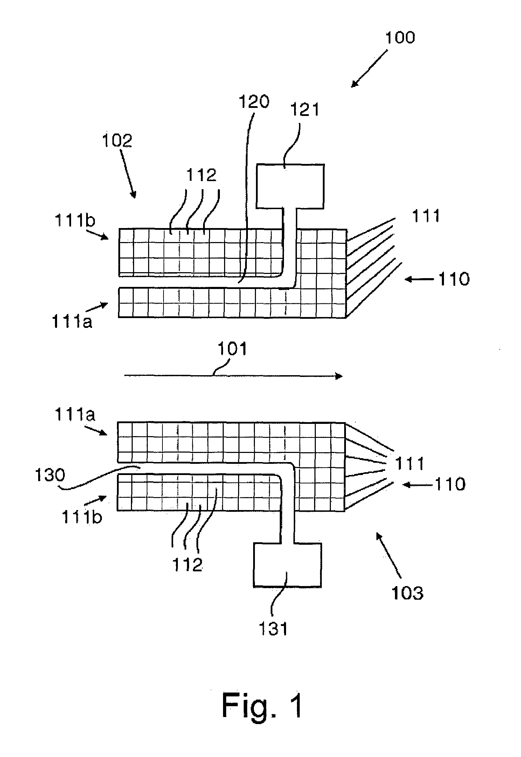

In figure 1, a heat exchanging system according to a preferred embodiment of the invention is schematically shown in a sectional side view. Figure 1 shows an exhaust flue 100 through which waste gas 101 emerging from combustion can be exhausted.

At one end 102, the exhaust flue can especially be connected with an appropriate furnace. At another end 103, the exhaust flue can especially be connected with an appropriate chimney.

The exhaust flue 100 comprises a refractory element 110. The refractory element 110 is especially embodied as a wall of the exhaust flue 100. This wall 110 of the exhaust flue 100 is constructed by several layers 111 of refractories 112. Each layer is constructed by a multitude of bricks 112 made of mortar.

Between layers of the wall 110, supply pipes 120 and 130 are embedded. The supply pipes 120, 130 are at least partially arranged inside the wall 110, i.e. inside the refractory element 110 of the exhaust flue 100.

Through these supply pipes 120 and 130, a medium can be transported. For this purpose, the supply pipes 120 and 130 can especially be connected with an appropriate medium supply mechanism 121 and 131, respectively.

In this example, the medium supply mechanism 121 is embodied as an oxygen supply mechanism. The supply pipe 120 is used to supply oxygen as a medium. The medium supply mechanism 131 is in this example embodied as a fuel supply mechanism. The supply pipe 130 is used to supply fuel as a medium.

Of course it is also possible that only supply pipes 120 to supply oxygen as a medium or only supply pipes 130 to supply fuel as a medium are arranged at least partially inside the refractory element 110 of the exhaust flue.

When waste gas 101 is transported through the exhaust flue 100, heat from the waste gas 101 is transported through an inner part 111a of the wall 110 towards the supply pipes 120 and 130. Thus, a medium transported through the supply pipes 120 and 130, respectively, can be preheated.

This inner part 111 a comprises layers of the wall 110 between the waste gas stream and the pipes 120 and 130, respectively. A thermal conductivity of refractories 112 in this inner part 111 a is chosen comparatively high. A thermal conductivity of refractories 112 in an outer part 111 b of the wall is chosen comparatively low. This outer part 111 b comprises layers of the wall 110 between the supply pipes 120 and 130, respectively, and an outer surface of the wall. This outer part 111 b especially functions as an insulation of the supply pipes 120 and 130, respectively.

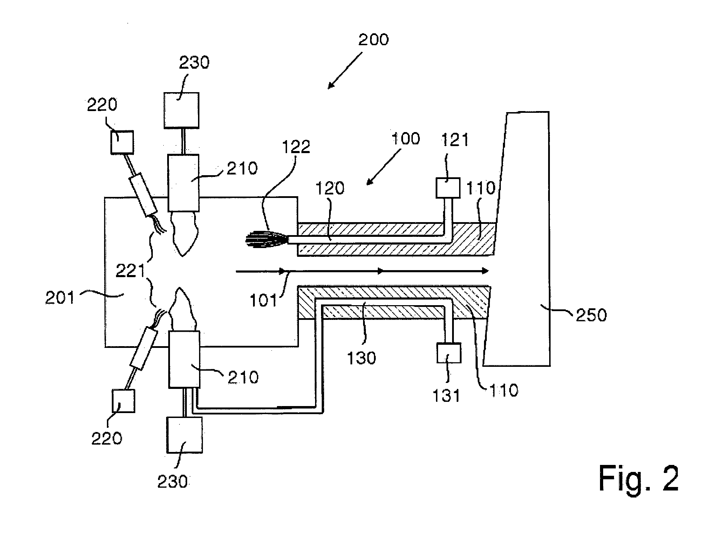

In figure 2, a unit melting furnace 200 according to a preferred embodiment of the invention is schematically shown in a sectional side view. The unit melting furnace 200 can for instance be used for glass melting.

The unit melting furnace 200 comprises a combustion chamber 201 with two burners 210. Each burner 210 is connected with a fuel supply mechanism 230. Moreover, the unit melting furnace 200 comprises an oxygen supply mechanism 220 in order to supply oxygen 221 to the burners 210.

The unit melting furnace 200 comprises a heat exchanging system according to a preferred embodiment of the invention. Fur this purpose, the unit melting furnace 200 is connected with an exhaust flue 100, analogously to the one depicted in figure 1. Via the exhaust flue 100, the unit melting furnace 200 is connected with a chimney 250.

By the supply pipe 120 and the oxygen supply mechanism 121, the burners 210 can be supplied with preheated oxygen 122, alternatively or additionally to the oxygen 221 supplied by the oxygen supply mechanism 220. By the supply pipe 130 and the fuel supply mechanism 131, the burners 210 can be supplied with preheated fuel, additionally to the fuel supplied by the fuel supply mechanism 230.

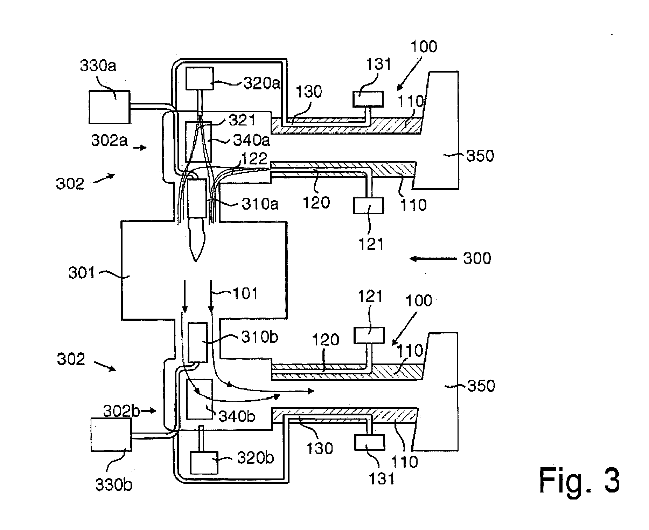

In figure 3, a regenerative furnace 300 according to a preferred embodiment of the invention is schematically shown in a sectional side view. The regenerative furnace 300 can for instance be used for glass melting.

In this example, regenerative furnace 300 is constructed as a cross-fired regenerative furnace. This cross-fired regenerative furnace 300 comprises a combustion chamber 301 and a regenerator 302. The regenerator 302 comprises two chambers 302a and 302b, which are constructed essentially identical. Each chamber 302a and 302b comprises a burner 310a, 310b and can comprise a fuel supply mechanism 330a, 330b, an oxygen supply mechanism 320a, 320b and a regenerator packing 340a, 340b, respectively. Each regenerator packing 340a and 340b comprises an arrangement of appropriate refractories, e.g. bricks.

The two chambers 302a and 302b of the regenerator are located on opposite sides of the cross-fired regenerative furnace 300. The regenerative furnace may also be constructed as an end-fired regenerative furnace. In case of an end-fired regenerative furnace, the chambers of the regenerator are located side by side next to each other in a rear wall of the regenerative furnace.

The two chambers 302a and 302b of the regenerator are operated reversely. After a certain time period (e.g. approximately 20 minutes), operation of the two chambers 302a and 302b is reversed.

In the example of figure 3, burner 310a is operated, whereas burner 310b is idle. Burner 310a is supplied with fuel by the fuel supply mechanism 330a. Oxygen 321 is supplied to the burner 310a by the oxygen supply mechanism 320a. The oxygen 321 is ducted through the regenerator packing 340a. This supplied oxygen 321 and the supplied fuel is preheated by the regenerator packing 340a. Waste gas 101 is ducted through the regenerator packing 340b of chamber 302b. Thus, that regenerator packing 340b is heated.

The regenerative furnace 300 comprises a heat exchanging system according to a preferred embodiment of the invention. Fur this purpose, each chamber 302a and 302b is connected with an exhaust flue 100, analogously to the one depicted in figure 1. The exhaust flues 100 are connected with a chimney 350.

By the supply pipe 120 and the oxygen supply mechanism 121, the burners 310a and 310b can be supplied with preheated oxygen 122, alternatively or additionally to the preheated oxygen 321 supplied by the oxygen supply mechanism 320a and 320b. By the supply pipe 130 and the fuel supply mechanism 131, the burners 310a and 310b can be supplied with preheated fuel, additionally to the preheated fuel supplied by the fuel supply mechanism 320a and 320b.

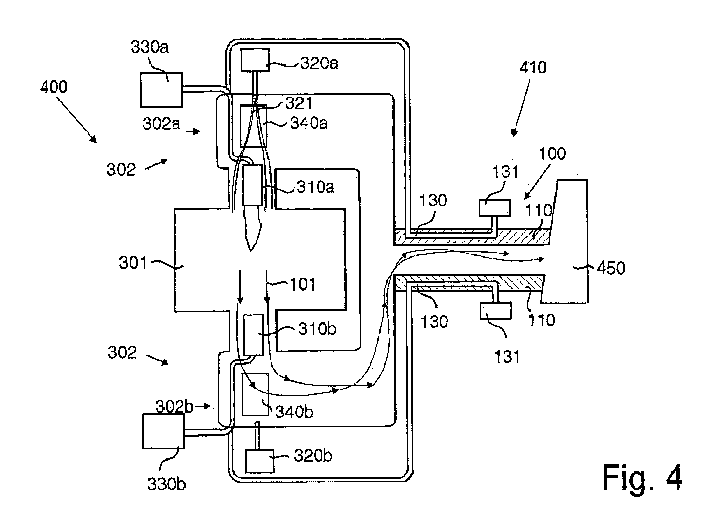

In figure 4, another embodiment of a regenerative furnace 400 according to a preferred embodiment of the invention is schematically shown in a sectional side view. The regenerative furnace 400 is also constructed as a cross-fired regenerative furnace, analogously to the regenerative furnace 300 of figure 3. Identical references in figures 3 and 4 refer to elements of identical construction.

The two chambers 302a and 302b of the regenerator 302 are connected with a common flue 410. Through this common flue 410 waste gases from the first chamber 302a as well as waste gases from the second chamber 302b are ducted to a chimney 450.

The common flue 410 is constructed as an exhaust flue 100, analogously to the one depicted in figure 1. Thus, the regenerative furnace 400 comprises a heat exchanging system according to a preferred embodiment of the invention.

In this example, only supply pipes 130 to supply fuel as a medium to the burners 310a and 310b are arranged inside the refractory element 110 of the common flue 410. Of course supply pipes 120 to supply oxygen can also be arranged inside the refractory element 110 of the common flue 410.

By the supply pipes 130 and the fuel supply mechanism 131, the burners 310a and 310b can be supplied with preheated fuel, additionally to the preheated fuel supplied by the fuel supply mechanism 320a and 320b.

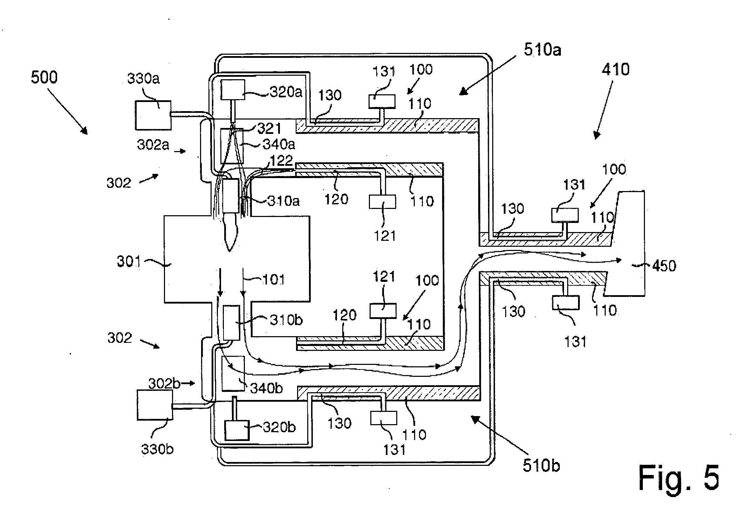

In figure 5, yet another embodiment of a regenerative furnace 500 (also constructed as a cross-fired regenerative furnace) according to a preferred embodiment of the invention is schematically shown in a sectional side view. Identical references in figures 3, 4, and 5 refer to elements of identical construction.

Each of the two chambers 302a and 302b of the regenerator 302 is connected with an exhaust flue 510a and 510b, respectively. These exhaust flues 510a and 510b are especially constructed as an element of the furnace and especially as a part of the regenerator. The exhaust flues 510a and 510b are constructed analogously to the exhaust flue 100 depicted in figure 1. Moreover the exhaust flues 510a and 510b are connected with a common flue 410, analogously to the one depicted in figure 4.

By the oxygen supply mechanism 121 and the supply pipes 120 arranged inside the refractory elements 110 of the exhaust flues 510a and 510b and the common flue 410, the burners 310a and 310b can be supplied with preheated oxygen 122, additionally to the preheated oxygen 321 supplied by the oxygen supply mechanism 320a and 320b. By the fuel supply mechanism 131 and the supply pipes 130 arranged inside the refractory elements 110 of the exhaust flues 510a and 510b and the common flue 410, the burners 310a and 310b can be supplied with preheated fuel, additionally to the preheated fuel supplied by the fuel supply mechanism 320a and 320b.

### Reference list

- 100: exhaust flue
- 101: waste gas
- 102: end of the exhaust flue
- 103: end of the exhaust flue
- 110: refractory element, wall
- 111: layers of refractories
- 111a: inner part of the wall
- 111b: outer part of the wall
- 112: refractories, bricks
- 120: supply pipe
- 121: medium supply mechanism, oxygen supply mechanism
- 122: preheated oxygen
- 130: supply pipe
- 131: medium supply mechanism, fuel supply mechanism

- 200: unit melting furnace
- 201: combustion chamber
- 210: burner
- 220: oxygen supply mechanism
- 221: oxygen
- 230: fuel supply mechanism
- 250: chimney

- 300: regenerative furnace, cross-fired regenerative furnace
- 301: combustion chamber
- 302: regenerator
- 302a: chamber of the regenerator
- 302b: chamber of the regenerator
- 310a: burner
- 310b: burner
- 320a: oxygen supply mechanism
- 320b: oxygen supply mechanism
- 321: oxygen
- 330a: fuel supply mechanism
- 330b: fuel supply mechanism
- 340a: regenerator packing
- 340b: regenerator packing
- 350: chimney

- 400: regenerative furnace, cross-fired regenerative furnace
- 410: common flue
- 450: chimney

- 500: regenerative furnace, cross-fired regenerative furnace
- 510a: exhaust flue
- 510b: exhaust flue

## Claims

1. A heat exchanging system for a furnace (200, 300) with
- a supply pipe (120, 130) adapted to supply a medium to a burner (210, 310a, 310b) of the furnace (200, 300),
- an exhaust flue (100) adapted to exhaust combustion waste gases (101) from the furnace (200, 300),
- the exhaust flue (100) comprising a refractory element (110),
**characterised in that**
- the supply pipe (120, 130) is arranged at least partially inside or on the refractory element (110) of the exhaust flue (100).

2. The heat exchanging system of claim 1, wherein the refractory element (110) of the exhaust (100) flue is constructed by one or several layers (111) of refractory (112).

3. The heat exchanging system of claim 1 or 2, wherein construction parameters of the heat exchanging system are chosen in a way to influence a temperature of the medium in the supply pipe (120, 130).

4. The heat exchanging system of claim 3, wherein a position of the supply pipe (120, 130) in or on top of the refractory element (110), a thermal conductivity of the refractory element (110) of the exhaust flue (100), a material of the refractory element (112) of the exhaust flue (100), a material of the supply pipe (120, 130), a circumference of the supply pipe (120, 130), a length of the supply pipe (120, 130) and/or a volume of media passable through the supply pipe (120, 130) per time are chosen in a way to adjust the temperature of the medium in the supply pipe (120, 130).

5. The heat exchanging system of claims 3 or 4, wherein the position of the supply pipe (120, 130) in or on top of the refractory element (110) is chosen dependent on a temperature gradient inside the refractory element (110).

6. The heat exchanging system of claim 5, wherein the supply pipe (120, 130) is positioned in or on top of the refractory element (110) at a position with a temperature of the refractory element (110) between 800°C and 900°C.

7. The heat exchanging system of any of the preceding claims, wherein the exhaust flue (100) is constructed as a common flue (410).

8. The heat exchanging system of any of the preceding claims, wherein the exhaust flue (100) is constructed as an element (510a, 510b) of the furnace (500).

9. The heat exchanging system of claim 8, wherein the exhaust flue (100) is constructed as an element (510a, 510b) of a regenerator (302) of the furnace (500).

10. A furnace (200, 300) with a heat exchanging system of any one of the previous claims.

11. The furnace of claim 10, constructed as a regenerative furnace (300) and comprising at least one regenerator (302).

12. The furnace (200, 300) of claim 10 or 11, constructed as a glass melting furnace or as a steel melting furnace.
